# EUROPEAN PATENT APPLICATION

(11) **EP 4 661 138 A1**
(43) Date of publication of application: **10.12.2025**
(21) Application number: 23924651.5
(22) Date of filing: 01.03.2023
(51) Int. Cl.: H01M 10/0567

(54) **ELECTROLYTE SOLUTION, BATTERY CELL COMPRISING SAME, BATTERY, AND ELECTRIC DEVICE**

(71) Applicant: Contemporary Amperex Technology Co., Limited, Ningde, Fujian 352100 (CN)
(72) Inventor: WANG, Fulin, Ningde, Fujian 352100 (CN); HAN, Changlong, Ningde, Fujian 352100 (CN); HUANG, Lei, Ningde, Fujian 352100 (CN); ZHANG, Cuiping, Ningde, Fujian 352100 (CN)
(74) Representative: Gong, Jinping
(86) International application number: PCT/CN2023/079099
(87) International publication number: WO 2024/178681

(57) **Abstract**

Provided in the embodiments of the present application are an electrolyte solution, a battery cell comprising same, a battery and an electric device. The electrolyte solution comprises: a first additive, which comprises an isocyanate compound as represented by formula (I), wherein R comprises at least one of a hydrogen atom, a halogen atom, a nitrogen-containing group, an oxygen-containing group, a sulfur-containing group, a phosphorus-containing group, an alkyl group, a cycloalkyl group, a phenyl group, an aryl group, a halophenyl group, and an alkyl, cycloalkyl, phenyl, aryl or halophenyl group containing at least one isocyanate radical, and the value of n is any natural number of 0-8; and a lithium salt, which comprises lithium difluorosulfonimide, the weight content of the lithium difluorosulfonimide in the lithium salt being 30%-85% based on the total weight of the lithium salt. A battery comprising the electrolyte solution has both improved cycle performance and prolonged storage life.

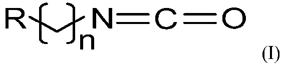

## Description

### TECHNICAL FIELD

The present application relates to the technical field of batteries, and in particular, to an electrolytic solution, a battery cell containing the same, a battery, and an electric device.

### BACKGROUND

In recent years, secondary batteries, due to their high energy density and good cycle performance, have been widely used in energy storage power systems such as hydropower, thermal power, wind power, and solar power stations, as well as in various fields such as electric tools, electric bicycles, electric motorcycles, electric vehicles, military equipment, and aerospace. With the great development and wide application of secondary batteries, higher requirements have been placed on their cycle performance, storage life, and the like.

Therefore, how to improve the cycle performance and prolong the storage life of secondary batteries is a technical problem that needs to be solved urgently.

### SUMMARY

Embodiments of the present application provide an electrolytic solution, a battery cell containing the same, a battery, and an electric device. The cycle performance and storage life of the battery containing the electrolytic solution are both improved.

In a first aspect, provided is an electrolytic solution. The electrolytic solution includes: a first additive, where the first additive includes an isocyanate compound represented by formula (I): 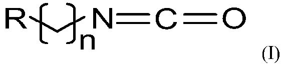 where R includes at least one of a hydrogen atom, a halogen atom, a nitrogen-containing group, an oxygen-containing group, a sulfur-containing group, a phosphorus-containing group, alkyl, cycloalkyl, phenyl, aryl, halophenyl, and alkyl, cycloalkyl, phenyl, aryl or halophenyl that contains at least one isocyanate group, and the value of n is any natural number of 0-8; and a lithium salt, where the lithium salt includes lithium bis(fluorosulfonyl)imide, and a weight content of the lithium bis(fluorosulfonyl)imide in the lithium salt is 30%-85%, based on a total weight of the lithium salt.

In the embodiments of the present application, the electrolytic solution includes a first additive and a lithium salt. The first additive includes an isocyanate compound, and the lithium salt includes lithium bis(fluorosulfonyl)imide. The electrode material of the battery is easy to absorb water. During the use of the battery, water adsorbed by the electrode material may diffuse into the electrolytic solution and react with the lithium salt in the electrolytic solution to generate an acid substance. This reaction leads to the degradation of the electrolytic solution, which increases the internal resistance of the battery; the corrosion of the electrode interface film, which affects the service life of the battery. In addition, water has a high reduction potential and is easy to be reduced, which results in a low initial efficiency and a low initial capacity of the battery. The isocyanate compound has a good acid-binding capacity, which can reduce the influence of water on the performance of the battery. Meanwhile, the isocyanate compound may participate in the formation of the electrode interface film, which can improve the thermal stability of the electrode interface film and reduce the possibility of gas generation and expansion of the battery, thereby improving the cycle performance and prolonging the storage life of the battery. However, the isocyanate compound may affect the kinetics performance of the battery and increase the film-forming impedance of the electrode interface film. In contrast, the lithium bis(fluorosulfonyl)imide is easy to dissociate into lithium ions in the electrolytic solution, which can increase the electrical conductivity of the battery, thereby improving the kinetics performance of the battery and reducing the film-forming impedance of the electrode interface film. The addition of both the isocyanate compound and the lithium bis(fluorosulfonyl)imide to the electrolytic solution, while prolonging the cycle service life and improving the storage performance of the battery, maintains the kinetics performance of the battery. Further, due to the low oxidation potential of the lithium bis(fluorosulfonyl)imide, the aluminum foil of the electrode plate may be easily corroded during the use of the battery, and the risk of thermal runaway of the battery is increased. Therefore, it is necessary to mix the lithium bis(fluorosulfonyl)imide with other types of lithium salts and control the weight content of the lithium bis(fluorosulfonyl)imide in the total lithium salts to 30%-85%. In this way, while the content of the lithium bis(fluorosulfonyl)imide can be ensured to effectively improve the kinetics performance of the battery, the content of the lithium bis(fluorosulfonyl)imide is controlled to not be excessively high, thereby reducing the possibility of corrosion of the aluminum foil by the lithium bis(fluorosulfonyl)imide, prolonging the service life of the battery, and meanwhile reducing the risk of thermal runaway of the battery. In other words, the technical solutions provided in the embodiments of the present application not only improve the cycle performance and prolong the storage life of the battery, but also reduce the risk of thermal runaway of the battery.

In one possible embodiment, the first additive includes at least one of the following substances:

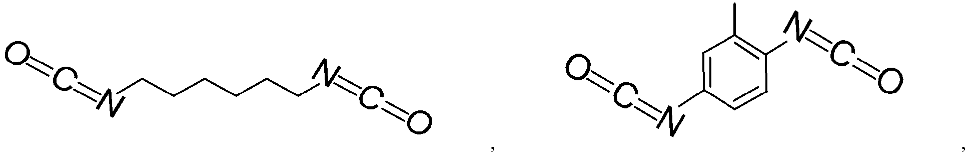

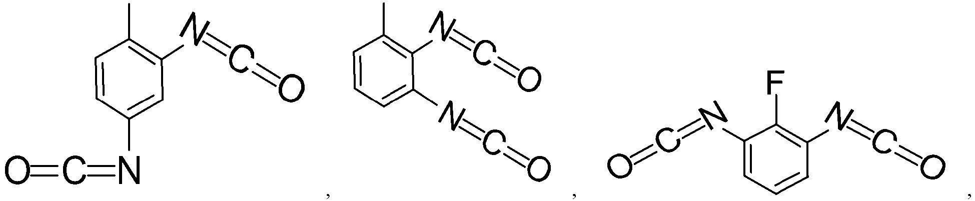

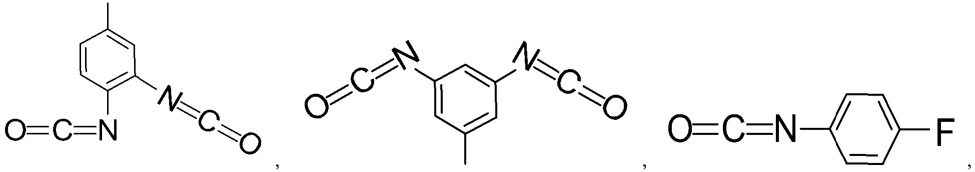

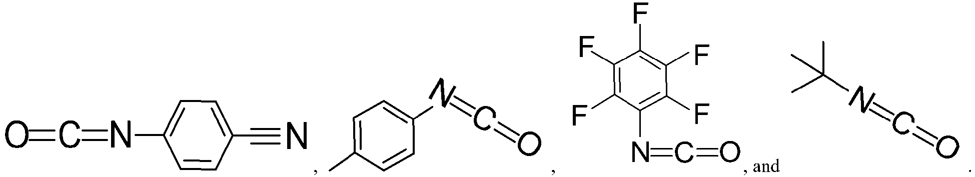

In one possible embodiment, the weight content ratio of the lithium bis(fluorosulfonyl)imide to the isocyanate compound in the electrolytic solution is 6:1-20:0.001.

The weight content ratio of the lithium bis(fluorosulfonyl)imide to the isocyanate compound in the electrolytic solution needs to be within a suitable range. In this way, the acid-binding capacity of the isocyanate compound can be ensured, which reduces the influence of water on the performance of the battery, thereby improving the cycle performance and prolonging the storage life of the battery. In addition, the lithium bis(fluorosulfonyl)imide can be enabled to counteract the adverse effect of the increase in the film-forming impedance of the electrode interface film caused by the isocyanate compound, thereby improving the kinetics performance of the battery.

In one possible embodiment, the weight content of the lithium bis(fluorosulfonyl)imide in the electrolytic solution is 3%-20%, based on the total weight of the electrolytic solution.

An excessively high weight content of the lithium bis(fluorosulfonyl)imide in the electrolytic solution may increase the concentration of the lithium salt, and an excessively high concentration of the lithium salt may increase the viscosity of the electrolytic solution, resulting in deteriorated low-temperature performance of the battery and increased production cost of the battery. In addition, an excessively low weight content of the lithium bis(fluorosulfonyl)imide in the electrolytic solution may not effectively improve the kinetics performance of the battery. Therefore, the weight content of the lithium bis(fluorosulfonyl)imide in the electrolytic solution is set to 3%-20%.

In one possible embodiment, the weight content of the isocyanate compound in the electrolytic solution is 0.001%-0.5%, based on the total weight of the electrolytic solution. Optionally, the weight content of the isocyanate compound in the electrolytic solution is 0.005%-0.3%, and further optionally, the weight content of the isocyanate compound in the electrolytic solution is 0.01%-0.1%.

An excessively high weight content of the isocyanate compound in the electrolytic solution may increase the film-forming impedance of the electrode interface film to a great extent and meanwhile affect the charging capacity of the battery. An excessively low weight content of the isocyanate compound in the electrolytic solution may result in a reduced amount of the hydrofluoric acid that can be bound by the isocyanate compound in the electrolytic solution, and the remaining free hydrofluoric acid in the electrolytic solution may affect the performance of the battery. Therefore, the weight content of the isocyanate compound in the electrolytic solution is set to 0.001%-0.5%.

In one possible embodiment, the lithium salt further includes at least one of lithium tetrafluoroborate, lithium bis(oxalato)borate, lithium difluoro(oxalato)borate, lithium hexafluoroarsenate, lithium perchlorate, lithium trifluoromethanesulfonate, lithium difluorophosphate, and lithium hexafluorophosphate.

The lithium bis(fluorosulfonyl)imide can undergo a complexation reaction with the aluminum foil of the electrode plate to form a complex. However, the complex is unstable. After the complex is dissolved in the solvent, the lithium bis(fluorosulfonyl)imide may continue to react with the aluminum foil. Over time, this leads to continuous corrosion of the aluminum foil. If the lithium salt includes at least one of the substances described above, the substances described above can react with the aluminum foil to generate a stable coordination compound, AlF₃, and LiF, thereby forming a stable passivation layer, which prevents the aluminum foil from being further corroded.

In one possible embodiment, the electrolytic solution further includes a second additive. The second additive includes at least one of a carbonate, a sulfonate, and a fluorinated compound.

The content of the isocyanate compound in the electrolytic solution is limited. To ensure that the total amount of the additives in the electrolytic solution is sufficient, other additives need to be added to reduce the risk of battery plummet. In addition, the carbonate, the sulfonate, and the fluorinated compound can participate in the film formation of the electrode interface film, which helps form a stable interface film, thereby improving the cycle performance and prolonging the storage life of the battery.

In one possible embodiment, the second additive includes at least one of vinylene carbonate, fluoroethylene carbonate, difluoroethylene carbonate, vinyl ethylene carbonate, ethylene sulfate, and 1,3-propanesultone.

In one possible embodiment, the electrolytic solution further includes a solvent. The solvent includes at least one of a cyclic ester and a chain ester.

Ester solvents generally have the advantages of low melting point, high dielectric constant, and the like. The addition of ester solvents such as cyclic esters and chain esters to the electrolytic solution can effectively reduce the viscosity of the electrolytic solution and improve the electrical conductivity of the electrolytic solution, thereby achieving the purpose of improving the low-temperature performance and rate capability of the electrolytic solution.

In one possible embodiment, the solvent includes at least one of ethylene carbonate, propylene carbonate, fluoroethylene carbonate, γ-butyrolactone, tetrahydrofuran, sulfolane, dimethyl carbonate, ethyl methyl carbonate, diethyl carbonate, methyl formate, methyl acetate, ethyl acetate, methyl acetate, methyl propionate, ethyl propionate, methyl butyrate, and ethyl butyrate.

In a second aspect, provided is a battery cell. The battery cell includes: the electrolytic solution according to the first aspect or any possible embodiment of the first aspect described above.

In a third aspect, provided is a battery. The battery includes the battery cell according to the second aspect or any possible embodiment of the second aspect described above.

In a fourth aspect, provided is an electric device. The electric device includes the battery according to the third aspect or any possible embodiment of the third aspect described above.

In the embodiments of the present application, the electrolytic solution includes a first additive and a lithium salt. The first additive includes an isocyanate compound, and the lithium salt includes lithium bis(fluorosulfonyl)imide. The electrode material of the battery is easy to absorb water. During the use of the battery, water adsorbed by the electrode material may diffuse into the electrolytic solution and react with the lithium salt in the electrolytic solution to generate an acid substance. This reaction leads to the degradation of the electrolytic solution, which increases the internal resistance of the battery; the corrosion of the electrode interface film, which affects the service life of the battery. In addition, water has a high reduction potential and is easy to be reduced, which results in a low initial efficiency and a low initial capacity of the battery. The isocyanate compound has a good acid-binding capacity, which can reduce the influence of water on the performance of the battery. Meanwhile, the isocyanate compound may participate in the formation of the electrode interface film, which can improve the thermal stability of the electrode interface film and reduce the possibility of gas generation and expansion of the battery, thereby improving the cycle performance and prolonging the storage life of the battery. However, the isocyanate compound may affect the kinetics performance of the battery and increase the film-forming impedance of the electrode interface film. In contrast, the lithium bis(fluorosulfonyl)imide is easy to dissociate into lithium ions in the electrolytic solution, which can increase the electrical conductivity of the battery, thereby improving the kinetics performance of the battery and reducing the film-forming impedance of the electrode interface film. The addition of both the isocyanate compound and the lithium bis(fluorosulfonyl)imide to the electrolytic solution, while prolonging the cycle service life and improving the storage performance of the battery, maintains the kinetics performance of the battery. Further, due to the low oxidation potential of the lithium bis(fluorosulfonyl)imide, the aluminum foil of the electrode plate may be easily corroded during the use of the battery, and the risk of thermal runaway of the battery is increased. Therefore, it is necessary to mix the lithium bis(fluorosulfonyl)imide with other types of lithium salts and control the weight content of the lithium bis(fluorosulfonyl)imide in the total lithium salts to 30%-85%. In this way, while the content of the lithium bis(fluorosulfonyl)imide can be ensured to effectively improve the kinetics performance of the battery, the content of the lithium bis(fluorosulfonyl)imide is controlled to not be excessively high, thereby reducing the possibility of corrosion of the aluminum foil by the lithium bis(fluorosulfonyl)imide, prolonging the service life of the battery, and meanwhile reducing the risk of thermal runaway of the battery. In other words, the technical solutions provided in the embodiments of the present application not only improve the cycle performance and prolong the storage life of the battery, but also reduce the risk of thermal runaway of the battery.

### BRIEF DESCRIPTION OF THE DRAWINGS

To more clearly illustrate the technical solutions in the embodiments of the present application, the drawings required for illustrating the embodiments of the present application are briefly described below. Apparently, the drawings in the following description illustrate merely some embodiments of the present application, and those of ordinary skills in the art may still derive other drawings from these drawings without creative efforts.
FIG. 1 is a schematic diagram of a battery cell according to one embodiment of the present application;
FIG. 2 is a schematic diagram of an exploded structure of a battery cell according to one embodiment of the present application;
FIG. 3 is a schematic diagram of an exploded structure of a battery according to one embodiment of the present application; and
FIG. 4 is a schematic diagram of an electric device according to one embodiment of the present application.

### DETAILED DESCRIPTION

Hereinafter, embodiments of the electrolytic solution, the battery cell containing the same, the battery, and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. In addition, the drawings and the following descriptions are provided to enable those skilled in the art to fully understand the present application and are not intended to limit the subject matter recited in the claims.

In the description of the present application, it should be noted that, unless otherwise specified, "a plurality" means two or more; the orientations or positional relationships indicated by the terms "upper", "lower", "left", "right", "inner", "outer", and the like are merely for the convenience of describing the present application and simplifying the description, rather than indicating or implying that the device or element referred to must have a specific orientation or be configured and operated in the specific orientation, and thus should not be construed as limiting the present application. Furthermore, the terms "first", "second", "third", and the like are used for descriptive purposes only and shall not be construed as indicating or implying relative importance.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. In addition, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer of ≥ 2, it is equivalent to disclosing that the parameter is, for example, an integer of 2, 3, 4, 5, 6, 7, 8, 9, 10, 11, 12, or the like.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, the following terms have the following meanings. Any undefined terms have recognized meanings in the art.

The "alkyl" refers to a monovalent saturated hydrocarbyl group of one or more carbon atoms. For example, the alkyl includes linear alkyl groups and branched alkyl groups, such as methyl (CH₃-), ethyl (CH₃CH₂-), n-propyl (CH₃CH₂CH₂-), isopropyl ((CH₃)₂CH-), n-butyl (CH₃CH₂CH₂CH₂-), isobutyl ((CH₃)₂CHCH₂-), sec-butyl ((CH₃)(CH₃CH₂)CH-), tert-butyl ((CH₃)₃C-), n-pentyl (CH₃CH₂CH₂CH₂CH₂-), neopentyl ((CH₃)₃CCH₂-), and the like.

The "substituted alkyl" refers to an alkyl group in which one or more carbon atoms in a linear or branched chain are replaced with any heteroatom or substituent. Optionally, the substituent may be an isocyanate group.

The "aryl" refers to an aromatic compound having a single ring or multiple condensed rings. For example, the aryl includes phenyl, naphthyl, indenyl, or the like. The aryl also includes a single ring fused to aryl, for example, tetrahydronaphthyl, 2,3-dihydroindenyl, or the like.

The "phenyl" refers to a group with a phenyl ring as a functional group.

The "halophenyl" refers to a phenyl ring in which one or more hydrogen atoms are replaced with halogen atoms.

The "halogen atom" refers to fluorine (F), chlorine (Cl), bromine (Br), iodine (I), or astatine (At).

Typically, a secondary battery includes a positive electrode plate, a negative electrode plate, an electrolytic solution, and a separator. During the charging and discharging process of the battery, active ions are intercalated and deintercalated back and forth between the positive electrode plate and the negative electrode plate. The electrolyte in the electrolytic solution conducts ions between the positive electrode plate and the negative electrode plate. The separator is arranged between the positive electrode plate and the negative electrode plate to prevent the positive and negative electrodes from short-circuiting while allowing the passage of ions, thereby enabling the electrochemical reaction of the secondary battery to proceed normally.

The secondary battery may include a lithium-ion battery, a sodium-ion battery, a magnesium-ion battery, or the like. In the present application, a lithium-ion battery is used as an example. The lithium-ion battery is a typical secondary battery, which is also referred to as a rocking-chair battery due to its charging and discharging based on a chemical reaction involving the deintercalation of lithium ions between the positive electrode and the negative electrode. During the charging process of the lithium-ion battery, the lithium ions are deintercalated from the positive electrode and move to the negative electrode to be intercalated into the negative electrode. During the discharging process, the lithium ions are deintercalated from the negative electrode and move to the positive electrode to be intercalated into the positive electrode.

In recent years, secondary batteries have achieved great development. While the secondary batteries have been widely used in various fields such as electric tools, electronic products, electric vehicles, and aerospace, higher requirements have been placed on the volume capacity, energy density, cycle performance, service life, safety performance, and the like of the secondary batteries.

The electrode material of the battery has a large specific surface area and is easy to absorb water. During the use of the battery, water adsorbed by the electrode material may diffuse into the electrolytic solution and react with the lithium salt in the electrolytic solution to generate an acid substance. This reaction leads to the degradation of the electrolytic solution, which increases the internal resistance of the battery, and the corrosion of the electrode interface film, which affects the service life of the battery.

In view of this, the present application provides an electrolytic solution. The electrolytic solution includes a first additive and a lithium salt. The first additive includes an isocyanate compound, and the lithium salt includes lithium bis(fluorosulfonyl)imide. The isocyanate compound has a good acid-binding capacity, which can reduce the influence of water on the performance of the battery. Meanwhile, the isocyanate compound may participate in the formation of the electrode interface film, which can improve the thermal stability of the electrode interface film and reduce the possibility of gas generation and expansion of the battery, thereby improving the cycle performance and prolonging the storage life of the battery. However, the isocyanate compound may affect the kinetics performance of the battery and increase the film-forming impedance of the electrode interface film. In contrast, the lithium bis(fluorosulfonyl)imide is easy to dissociate into lithium ions in the electrolytic solution, which can increase the electrical conductivity of the battery, thereby improving the kinetics performance of the battery and reducing the film-forming impedance of the electrode interface film. The addition of both the isocyanate compound and the lithium bis(fluorosulfonyl)imide to the electrolytic solution, while prolonging the cycle service life and improving the storage performance of the battery, maintains the kinetics performance of the battery. Further, due to the low oxidation potential of the lithium bis(fluorosulfonyl)imide, the aluminum foil of the electrode plate may be easily corroded during the use of the battery, and the risk of thermal runaway of the battery is increased. Therefore, it is necessary to mix the lithium bis(fluorosulfonyl)imide with other types of lithium salts and control the weight content of the lithium bis(fluorosulfonyl)imide in the total lithium salts to 30%-85%. In this way, while the content of the lithium bis(fluorosulfonyl)imide can be ensured to effectively improve the kinetics performance of the battery, the content of the lithium bis(fluorosulfonyl)imide is controlled to not be excessively high, thereby reducing the possibility of corrosion of the aluminum foil by the lithium bis(fluorosulfonyl)imide, prolonging the service life of the battery, and meanwhile reducing the risk of thermal runaway of the battery. In other words, the technical solutions provided in the embodiments of the present application not only improve the cycle performance and prolong the storage life of the battery, but also reduce the risk of thermal runaway of the battery.

Hereinafter, embodiments of the present application are described in detail.

### [Electrolytic Solution]

The electrolytic solution conducts ions between the positive electrode plate and the negative electrode plate. The electrolytic solution provided in the present application includes a first additive and a lithium salt. Specifically, the first additive includes an isocyanate compound represented by formula (I): 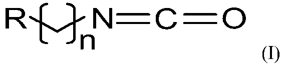 where R includes at least one of a hydrogen atom, a halogen atom, a nitrogen-containing group, an oxygen-containing group, a sulfur-containing group, a phosphorus-containing group, alkyl, cycloalkyl, phenyl, aryl, halophenyl, and alkyl, cycloalkyl, phenyl, aryl or halophenyl that contains at least one isocyanate group, and the value of n is any natural number of 0-8.

The lithium salt includes lithium bis(fluorosulfonyl)imide, and the weight content of the lithium bis(fluorosulfonyl)imide in the lithium salt is 30%-85%, based on the total weight of the lithium salt.

Specifically, the electrolytic solution provided in the embodiments of the present application includes both the isocyanate compound and the lithium bis(fluorosulfonyl)imide. The isocyanate compound has a good acid-binding capacity, which can reduce the influence of water on the performance of the battery. Meanwhile, the isocyanate compound may participate in the formation of the electrode interface film, which can improve the thermal stability of the electrode interface film and reduce the possibility of gas generation and expansion of the battery, thereby improving the cycle performance and prolonging the storage life of the battery. However, the isocyanate compound may affect the kinetics performance of the battery and increase the film-forming impedance of the electrode interface film. In contrast, the lithium bis(fluorosulfonyl)imide is easy to dissociate into lithium ions in the electrolytic solution, which can increase the electrical conductivity of the battery, thereby improving the kinetics performance of the battery and reducing the film-forming impedance of the electrode interface film.

Therefore, in the electrolytic solution provided in the embodiments of the present application, the addition of both the isocyanate compound and the lithium bis(fluorosulfonyl)imide to the electrolytic solution, while prolonging the cycle service life and improving the storage performance of the battery, maintains the kinetics performance of the battery. Further, due to the low oxidation potential of the lithium bis(fluorosulfonyl)imide, the aluminum foil of the electrode plate may be easily corroded during the use of the battery, and the risk of thermal runaway of the battery is increased. Therefore, it is necessary to mix the lithium bis(fluorosulfonyl)imide with other types of lithium salts and control the weight content of the lithium bis(fluorosulfonyl)imide in the total lithium salts to 30%-85%. In this way, while the content of the lithium bis(fluorosulfonyl)imide can be ensured to effectively improve the kinetics performance of the battery, the content of the lithium bis(fluorosulfonyl)imide is controlled to not be excessively high, thereby reducing the possibility of corrosion of the aluminum foil by the lithium bis(fluorosulfonyl)imide, prolonging the service life of the battery, and meanwhile reducing the risk of thermal runaway of the battery. In other words, the technical solutions provided in the embodiments of the present application not only improve the cycle performance and prolong the storage life of the battery, but also reduce the risk of thermal runaway of the battery.

Optionally, in some embodiments, the first additive includes at least one of the following substances: 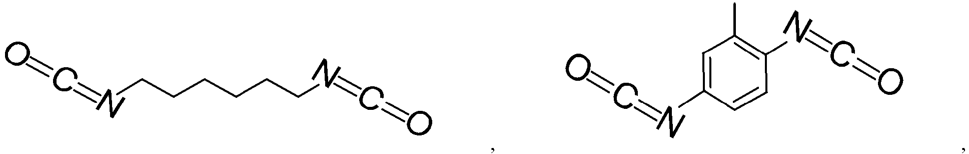 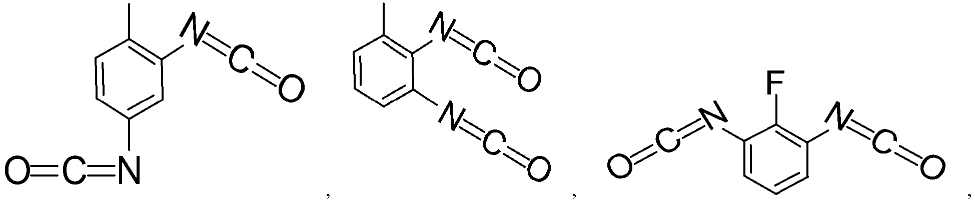 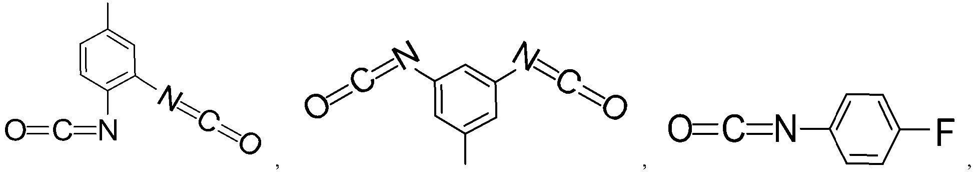 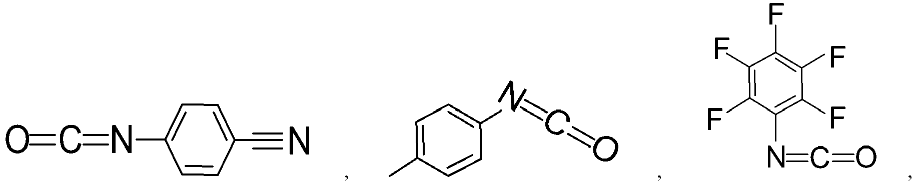 and

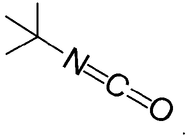

It should be understood that the isocyanate compound included in the first additive provided in the embodiments of the present application is only used as an example and should not be construed as limiting the isocyanate compound of the present application.

Optionally, in some embodiments, the weight content ratio of the lithium bis(fluorosulfonyl)imide to the isocyanate compound in the electrolytic solution is 6:1-20:0.001.

Specifically, the weight content ratio of the lithium bis(fluorosulfonyl)imide to the isocyanate compound in the electrolytic solution may be 6:1, 12:1, 24:1, 48:1, 96:1, 192:1, 384:1, 768:1, 1.536:0.001, 3.072:0.001, 6.144:0.001, 12.288:0.001, or 20:0.001, or within a range defined by combining any two of the numerical values of the ratios described above.

The weight content ratio of the lithium bis(fluorosulfonyl)imide to the isocyanate compound in the electrolytic solution needs to be within a suitable range. In this way, the acid-binding capacity of the isocyanate compound can be ensured, which reduces the influence of water on the performance of the battery, thereby improving the cycle performance and prolonging the storage life of the battery. In addition, the lithium bis(fluorosulfonyl)imide can be enabled to counteract the adverse effect of the increase in the film-forming impedance of the electrode interface film caused by the isocyanate compound, thereby improving the kinetics performance of the battery.

Optionally, in some embodiments, the weight content of the lithium bis(fluorosulfonyl)imide in the electrolytic solution is 3%-20%, based on the total weight of the electrolytic solution.

Specifically, the weight content of the lithium bis(fluorosulfonyl)imide in the electrolytic solution may be 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, 12%, 12.5%, 13%, 13.5%, 14%, 14.5%, 15%, 15.5%, 16%, 16.5%, 17%, 17.5%, 18%, 18.5%, 19%, 19.5%, or 20%, or within a range defined by combining any two of the numerical values described above.

An excessively high weight content of the lithium bis(fluorosulfonyl)imide in the electrolytic solution may increase the concentration of the lithium salt, and an excessively high concentration of the lithium salt may increase the viscosity of the electrolytic solution, resulting in deteriorated low-temperature performance of the battery and increased production cost of the battery. In addition, an excessively low weight content of the lithium bis(fluorosulfonyl)imide in the electrolytic solution may not effectively improve the kinetics performance of the battery. Therefore, the weight content of the lithium bis(fluorosulfonyl)imide in the electrolytic solution is set to 3%-20%.

Optionally, in some embodiments, the weight content of the isocyanate compound in the electrolytic solution is 0.001%-0.5%, based on the total weight of the electrolytic solution. Optionally, the weight content of the isocyanate compound in the electrolytic solution is 0.005%-0.3%, and further optionally, the weight content of the isocyanate compound in the electrolytic solution is 0.01%-0.1%.

Specifically, the weight content of the isocyanate compound in the electrolytic solution may be 0.001%, 0.0015%, 0.002%, 0.0025%, 0.003%, 0.0035%, 0.004%, 0.0045%, 0.005%, 0.0055%, 0.006%, 0.0065%, 0.007%, 0.0075%, 0.008%, 0.0085%, 0.009%, 0.0095%, 0.01%, 0.02%, 0.03%, 0.04%, 0.05%, 0.06%, 0.07%, 0.08%, 0.09%, 0.1%, 0.2%, 0.3%, 0.4%, or 0.5%, or within a range defined by combining any two of the numerical values described above.

An excessively high weight content of the isocyanate compound in the electrolytic solution may increase the film-forming impedance of the electrode interface film to a great extent and meanwhile affect the charging capacity of the battery. An excessively low weight content of the isocyanate compound in the electrolytic solution may result in a reduced amount of the hydrofluoric acid that can be bound by the isocyanate compound in the electrolytic solution, and the remaining free hydrofluoric acid in the electrolytic solution may affect the performance of the battery. Therefore, the weight content of the isocyanate compound in the electrolytic solution is set to 0.001%-0.5%.

Optionally, in some embodiments, the lithium salt further includes at least one of lithium tetrafluoroborate, lithium bis(oxalato)borate, lithium difluoro(oxalato)borate, lithium hexafluoroarsenate, lithium perchlorate, lithium trifluoromethanesulfonate, lithium difluorophosphate, and lithium hexafluorophosphate.

The lithium bis(fluorosulfonyl)imide can undergo a complexation reaction with the aluminum foil of the electrode plate to form a complex. However, the complex is unstable. After the complex is dissolved in the solvent, the lithium bis(fluorosulfonyl)imide may continue to react with the aluminum foil. Over time, this leads to continuous corrosion of the aluminum foil. If the lithium salt includes at least one of the substances described above, the substances described above can react with the aluminum foil to generate a stable coordination compound, AlF₃, and LiF, thereby forming a stable passivation layer, which prevents the aluminum foil from being further corroded.

Optionally, in some embodiments, the electrolytic solution further includes a second additive. The second additive includes at least one of a carbonate, a sulfonate, and a fluorinated compound.

Specifically, the second additive includes at least one of vinylene carbonate (VC), fluoroethylene carbonate (FEC), difluoroethylene carbonate (DFEC), vinyl ethylene carbonate (VEC), ethylene sulfate (DTD), and 1,3-propanesultone.

The content of the isocyanate compound in the electrolytic solution is limited. To ensure that the total amount of the additives in the electrolytic solution is sufficient, other additives need to be added to reduce the risk of battery plummet. In addition, the carbonate, the sulfonate, and the fluorinated compound can participate in the film formation of the electrode interface film, which helps form a stable interface film, thereby improving the cycle performance and prolonging the storage life of the battery.

Optionally, in some embodiments, the electrolytic solution further includes a solvent. The solvent includes at least one of a cyclic ester and a chain ester.

Specifically, the solvent includes at least one of ethylene carbonate, propylene carbonate, fluoroethylene carbonate, γ-butyrolactone, tetrahydrofuran, sulfolane, dimethyl carbonate, ethyl methyl carbonate, diethyl carbonate, methyl formate, methyl acetate, ethyl acetate, methyl acetate, methyl propionate, ethyl propionate, methyl butyrate, and ethyl butyrate.

Ester solvents generally have the advantages of low melting point, high dielectric constant, and the like. The addition of ester solvents such as cyclic esters and chain esters to the electrolytic solution can effectively reduce the viscosity of the electrolytic solution and improve the electrical conductivity of the electrolytic solution, thereby achieving the purpose of improving the low-temperature performance and rate capability of the electrolytic solution.

The battery cell, the battery, and the electric device of the present application are described hereinafter with reference to the drawings.

The embodiments of the present application further provide a battery cell. Typically, a battery cell includes a positive electrode plate, a negative electrode plate, an electrolytic solution, and a separator. During the charging and discharging process of the battery, active ions are intercalated and deintercalated back and forth between the positive electrode plate and the negative electrode plate. The electrolyte in the electrolytic solution conducts ions between the positive electrode plate and the negative electrode plate. The separator is arranged between the positive electrode plate and the negative electrode plate to primarily prevent the positive and negative electrodes from short-circuiting while allowing the passage of ions.

It should be understood that the "intercalation" process described in the present application refers to a process in which active ions are intercalated into a positive electrode active material or a negative electrode active material due to an electrochemical reaction, and the "deintercalation" process described in the present application refers to a process in which active ions are deintercalated from a positive electrode active material or a negative electrode active material due to an electrochemical reaction.

### [Positive Electrode Plate]

The positive electrode plate includes a positive electrode current collector and a positive electrode film layer arranged on at least one surface of the positive electrode current collector, and the positive electrode film layer includes a positive electrode active material.

As an example, the positive electrode current collector has two surfaces opposite to each other in its own thickness direction, and the positive electrode film layer is arranged on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material substrate and a metal layer formed on at least one surface of the polymer material substrate. The composite current collector may be fabricated by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, a positive electrode active material for use in lithium-ion batteries known in the art may be used as the positive electrode active material. As an example, the positive electrode active material may include at least one of the following materials: a lithium-containing phosphate with an olivine structure, a lithium transition metal oxide, and respective modified compounds thereof. However, the present application is not limited to these materials, and other conventional materials that can be used as positive electrode active materials for lithium-ion batteries may also be used. These positive electrode active materials may be used alone or in a combination of two or more. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM333), LiNi_{0.5}Co_{0.2}Mn_{0.3}O₂ (also referred to as NCM523), LiNi_{0.5}Co_{0.25}Mn_{0.25}O₂ (also referred to as NCM211), LiNi_{0.6}Co_{0.2}Mn_{0.2}O₂ (also referred to as NCM622), LiNi_{0.8}Co_{0.1}Mn_{0.1}O₂ (also referred to as NCM811)), a lithium nickel cobalt aluminum oxide (such as LiNi_{0.85}Co_{0.15}Al_{0.05}O₂), and modified compounds thereof. Examples of the lithium-containing phosphate with an olivine structure may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Negative Electrode Plate]

The negative electrode plate includes a negative electrode current collector and a negative electrode film layer arranged on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector may be fabricated by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may include at least one of elemental silicon, a silicon-oxygen compound, a silicon-carbon composite, a silicon-nitrogen composite, and a silicon alloy. The tin-based material may include at least one of elemental tin, a tin-oxygen compound, and a tin alloy. However, the present application is not limited to these materials, and other conventional materials that can be used as negative electrode active materials for batteries may also be used. These negative electrode active materials may be used alone or in a combination of two or more.

In some embodiments, the negative electrode film layer further optionally includes a binder. The binder may include at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may include at least one of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

### [Separator]

In some embodiments, a battery cell further includes a separator. The present application does not particularly limit the type of the separator, and any porous-structure separator known to have good chemical stability and mechanical stability may be selected and used.

In some embodiments, the separator may be made of a material including at least one of glass fiber, non-woven fabric, polyethylene, polypropylene, and polyvinylidene difluoride. The separator may be a single-layer film or a multi-layer composite film, and there is no particular limitation on this. When the separator is a multi-layer composite film, the materials of the layers may be the same or different, and there is no particular limitation on this.

In some embodiments, the positive electrode plate, the negative electrode plate, and the separator may be prepared into an electrode assembly through a winding process or a stacking process.

In some embodiments, the battery cell may include an outer packaging. The outer packaging can be used for packaging the electrode assembly and the electrolytic solution described above.

In some embodiments, the outer packaging of the battery cell may be a hard shell, such as a hard plastic shell, an aluminum shell, or a steel shell. The outer packaging of the battery cell may also be a soft pack, such as a pouch-type soft pack. The soft pack may be made of plastic, and examples of the plastic may include polypropylene, polybutylene terephthalate, polybutylene succinate, and the like.

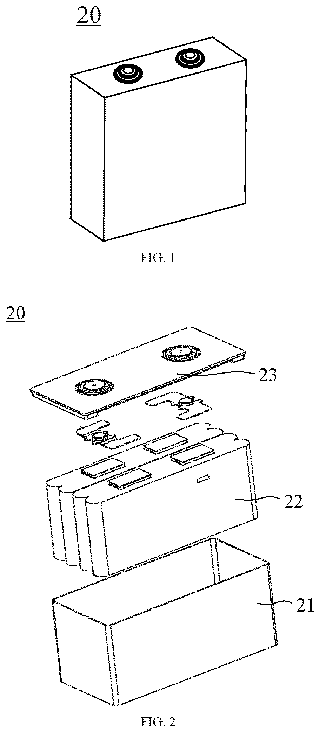

The present application does not particularly limit the shape of the battery cell, and it may have a cylindrical shape, a square shape, or any other shape. For example, FIG. 1 shows a battery cell 20 having a square structure as one example.

In some embodiments, referring to FIG. 2, the outer packaging may include a housing 21 and a cover plate 23. The housing 21 may include a bottom plate and a side plate connected to the bottom plate, and the bottom plate and the side plate define, in an enclosing manner, an accommodating cavity. The housing 21 is provided with an opening in communication with the accommodating cavity, and the cover plate 23 is capable of lidding the opening to close the accommodating cavity. The positive electrode plate, the negative electrode plate, and the separator may be subjected to a winding process or a stacking process to form an electrode assembly 22. The electrode assembly 22 is packaged in the accommodating cavity. The electrolytic solution is infiltrated into the electrode assembly 22. The number of the electrode assembly 22 included in the battery cell 20 may be one or more, and those skilled in the art can select the number according to specific and actual requirements.

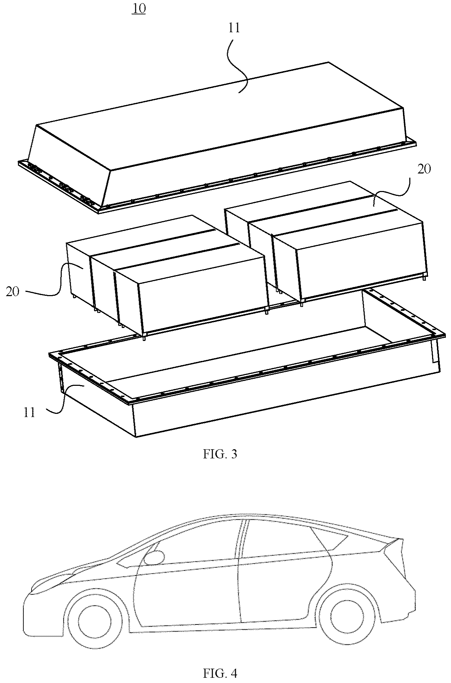

In some embodiments, a battery 10 may include a plurality of battery cells 20. For example, as shown in FIG. 3, a schematic structural diagram of a secondary battery 10 according to one embodiment of the present application, the secondary battery 10 may include a plurality of battery cells 20. The battery 10 may further include a case 11, and the interior of the case 11 is a hollow structure. The plurality of battery cells 20 are accommodated in the case 11. For example, the plurality of battery cells 20, after being connected in parallel, in series, or in series-parallel connection, are disposed inside the case 11.

Optionally, the battery 10 may further include other structures, which are not described in detail herein. For example, the battery 10 may further include a busbar component, and the busbar component is configured to achieve electrical connection among the plurality of battery cells 20, such as in parallel, in series, or in series-parallel connection. Specifically, the busbar component may achieve electrical connection among the battery cells 20 by connecting to electrode terminals of the battery cells 20. Further, the busbar component may be fixed to the electrode terminals of the battery cells 20 by welding. The electrical energy of the plurality of battery cells 20 can be further conducted through a conductive mechanism passing through the case 11. Optionally, the conductive mechanism may also belong to the busbar component.

Based on different power requirements, the number of the battery cells 20 may be set to any numerical value. The plurality of battery cells 20 may be connected in series, in parallel, or in series-parallel connection to achieve a higher capacity or power. Since each battery 10 may include a large number of the battery cells 20, the battery cells 20 may be arranged in groups for ease of mounting, with each group of the battery cells 20 forming a battery module. The number of the battery cells 20 included in the battery module is not limited and may be set according to requirements. The battery may include a plurality of battery modules. The plurality of battery modules may be connected in series, in parallel, or in series-parallel connection.

In addition, the present application further provides an electric device. The electric device includes at least one of the battery cell, the battery module, or the battery according to the present application. The battery cell, the battery module, or the battery may be used as a power source for the electric device, or may also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As for the electric device, a battery cell, a battery module, or a battery may be selected according to its usage requirements.

FIG. 4 shows an electric device as an example. The electric device is a pure electric vehicle, a hybrid electric vehicle, a plug-in hybrid electric vehicle, or the like. To meet the requirements of the electric device for high power and high energy density of the battery cell, the battery or the battery module may be used.

As another example, the device may be a mobile phone, a tablet computer, a laptop computer, or the like. The device is generally required to be light and thin, and a battery cell can thus be used as a power source.

### [Examples]

Hereinafter, examples of the present application are described. The examples described below are exemplary and only intended to explain the present application. They should not be construed as limiting the present application. The examples without techniques or conditions specified therein are implemented according to techniques or conditions described in the literature in the art or according to product instructions. Reagents or instruments used herein without specified manufacturers are all commercially available conventional products.

### (1) Preparation of Battery Cell

### (1.1) Preparation of positive electrode plate

Lithium iron phosphate (LFP) with an olivine structure, polyvinylidene fluoride (PVDF), and carbon black (SP) were mixed with a solvent in a mass ratio of 97:2.5:0.5, and the mixture was stirred to obtain a uniformly dispersed positive electrode slurry. Both surfaces of an aluminum foil were uniformly coated with the positive electrode slurry, followed by drying, cold pressing, and cutting to obtain the positive electrode plate.

### (1.2) Preparation of negative electrode plate

A negative electrode active material artificial graphite, carbon black (SP), styrene-butadiene rubber (SBR), and carboxymethyl fiber (CMC) were mixed with a solvent in a mass ratio of 97:0.5:1.5:1, and the mixture was stirred to obtain a uniformly dispersed negative electrode slurry. Both surfaces of a copper foil were uniformly coated with the negative electrode slurry, followed by drying, cold pressing, and cutting to obtain the negative electrode plate.

### (1.3) Preparation of separator

A conventional polyethylene film was used as the separator.

### (1.4) Preparation of electrolytic solution

Electrolytic solution 1: Under an argon atmosphere, 25 wt% ethylene carbonate (EC), 55 wt% dimethyl carbonate (DMC), 20 wt% ethyl methyl carbonate (EMC), 2 wt% vinylene carbonate (VC), 0.5 wt% hexamethylene diisocyanate, 7 wt% lithium hexafluorophosphate (LiPF₆), and 3 wt% lithium bis(fluorosulfonyl)imide (LiFSI) were mixed and dissolved based on the total mass of the electrolytic solution to obtain electrolytic solution 1.

Electrolytic solution 2: Under an argon atmosphere, 25 wt% EC, 55 wt% DMC, 20 wt% EMC, 2 wt% VC, 0.3 wt% hexamethylene diisocyanate, 7 wt% LiPF₆, and 3 wt% LiFSI were mixed and dissolved based on the total mass of the electrolytic solution to obtain electrolytic solution 2.

Electrolytic solution 3: Under an argon atmosphere, 25 wt% EC, 55 wt% DMC, 20 wt% EMC, 2 wt% VC, 0.1 wt% hexamethylene diisocyanate, 7 wt% LiPF₆, and 3 wt% LiFSI were mixed and dissolved based on the total mass of the electrolytic solution to obtain electrolytic solution 3.

Electrolytic solution 4: Under an argon atmosphere, 25 wt% EC, 55 wt% DMC, 20 wt% EMC, 2 wt% VC, 0.1 wt% hexamethylene diisocyanate, 4 wt% LiPF₆, and 6 wt% LiFSI were mixed and dissolved based on the total mass of the electrolytic solution to obtain electrolytic solution 4.

Electrolytic solution 5: Under an argon atmosphere, 25 wt% EC, 55 wt% DMC, 20 wt% EMC, 2 wt% VC, 0.1 wt% hexamethylene diisocyanate, 1.5 wt% LiPF₆, and 8.5 wt% LiFSI were mixed and dissolved based on the total mass of the electrolytic solution to obtain electrolytic solution 5.

Electrolytic solution 6: Under an argon atmosphere, 25 wt% EC, 55 wt% DMC, 20 wt% EMC, 2 wt% VC, 0.1 wt% hexamethylene diisocyanate, 10 wt% LiPF₆, and 10 wt% LiFSI were mixed and dissolved based on the total mass of the electrolytic solution to obtain electrolytic solution 6.

Electrolytic solution 7: Under an argon atmosphere, 25 wt% EC, 55 wt% carbon DMC, 20 wt% EMC, 2 wt% VC, 0.1 wt% hexamethylene diisocyanate, 5 wt% LiPF₆, and 15 wt% LiFSI were mixed and dissolved based on the total mass of the electrolytic solution to obtain electrolytic solution 7.

Electrolytic solution 8: Under an argon atmosphere, 25 wt% EC, 55 wt% DMC, 20 wt% EMC, 2 wt% VC, 0.1 wt% hexamethylene diisocyanate, 3 wt% LiPF₆, and 17 wt% LiFSI were mixed and dissolved based on the total mass of the electrolytic solution to obtain electrolytic solution 8.

Electrolytic solution 9: Under an argon atmosphere, 25 wt% EC, 55 wt% DMC, 20 wt% EMC, 2 wt% VC, 0.01 wt% hexamethylene diisocyanate, 4 wt% LiPF₆, and 6 wt% LiFSI were mixed and dissolved based on the total mass of the electrolytic solution to obtain electrolytic solution 9.

Electrolytic solution 10: Under an argon atmosphere, 25 wt% EC, 55 wt% DMC, 20 wt% EMC, 2 wt% VC, 0.002 wt% hexamethylene diisocyanate, 4 wt% LiPF₆, and 6 wt% LiFSI were mixed and dissolved based on the total mass of the electrolytic solution to obtain electrolytic solution 10.

Electrolytic solution 11: Under an argon atmosphere, 25 wt% EC, 55 wt% DMC, 20 wt% EMC, 2 wt% VC, 0.001 wt% hexamethylene diisocyanate, 4 wt% LiPF₆, and 6 wt% LiFSI were mixed and dissolved based on the total mass of the electrolytic solution to obtain electrolytic solution 11.

Electrolytic solution 12: Under an argon atmosphere, 25 wt% EC, 55 wt% DMC, 20 wt% EMC, 2 wt% VC, 0.001 wt% hexamethylene diisocyanate, 5 wt% LiPF₆, and 15 wt% LiFSI were mixed and dissolved based on the total mass of the electrolytic solution to obtain electrolytic solution 12.

Electrolytic solution 13: Under an argon atmosphere, 25 wt% EC, 55 wt% DMC, 20 wt% EMC, 2 wt% VC, 0.001 wt% hexamethylene diisocyanate, 3.5 wt% LiPF₆, and 20 wt% LiFSI were mixed and dissolved based on the total mass of the electrolytic solution to obtain electrolytic solution 13.

Electrolytic solution 14: Under an argon atmosphere, 25 wt% EC, 55 wt% DMC, 20 wt% EMC, 2 wt% VC, 0.1 wt% toluene diisocyanate, 4 wt% LiPF₆, and 6 wt% LiFSI were mixed and dissolved based on the total mass of the electrolytic solution to obtain electrolytic solution 14.

Electrolytic solution 15: Under an argon atmosphere, 25 wt% EC, 55 wt% DMC, 20 wt% EMC, 2 wt% VC, 0.1 wt% 4-fluorophenyl isocyanate, 4 wt% LiPF₆, and 6 wt% LiFSI were mixed and dissolved based on the total mass of the electrolytic solution to obtain electrolytic solution 15.

Electrolytic solution 16: Under an argon atmosphere, 25 wt% EC, 55 wt% DMC, 20 wt% EMC, 2 wt% VC, 0.1 wt% 4-cyanophenyl isocyanate, 4 wt% LiPF₆, and 6 wt% LiFSI were mixed and dissolved based on the total mass of the electrolytic solution to obtain electrolytic solution 16.

Electrolytic solution 17: Under an argon atmosphere, 25 wt% EC, 55 wt% DMC, 20 wt% EMC, 1 wt% VC, 1 wt% fluoroethylene carbonate (FEC), 0.1 wt% hexamethylene diisocyanate, 4 wt% LiPF₆, and 6 wt% LiFSI were mixed and dissolved based on the total mass of the electrolytic solution to obtain electrolytic solution 17.

Electrolytic solution 18: Under an argon atmosphere, 25 wt% EC, 55 wt% DMC, 20 wt% EMC, 1 wt% VC, 1 wt% ethylene sulfate (DTD), 0.1 wt% hexamethylene diisocyanate, 4 wt% LiPF₆, and 6 wt% LiFSI were mixed and dissolved based on the total mass of the electrolytic solution to obtain electrolytic solution 18.

Electrolytic solution 19: Under an argon atmosphere, 25 wt% EC, 55 wt% DMC, 20 wt% EMC, 1 wt% VC, 1 wt% 1,3-propanesultone, 0.1 wt% hexamethylene diisocyanate, 4 wt% LiPF₆, and 6 wt% LiFSI were mixed and dissolved based on the total mass of the electrolytic solution to obtain electrolytic solution 19.

Electrolytic solution 20: Under an argon atmosphere, 25 wt% EC, 55 wt% DMC, 20 wt% EMC, 0.1 wt% hexamethylene diisocyanate, 4 wt% LiPF₆, and 6 wt% LiFSI were mixed and dissolved based on the total mass of the electrolytic solution to obtain electrolytic solution 20.

Electrolytic solution 21: Under an argon atmosphere, 25 wt% EC, 55 wt% DMC, 20 wt% EMC, 2 wt% VC, 7 wt% LiPF₆, and 3 wt% LiFSI were mixed and dissolved based on the total mass of the electrolytic solution to obtain electrolytic solution 21.

Electrolytic solution 22: Under an argon atmosphere, 25 wt% EC, 55 wt% DMC, 20 wt% EMC, 2 wt% VC, 4 wt% LiPF₆, and 6 wt% LiFSI were mixed and dissolved based on the total mass of the electrolytic solution to obtain electrolytic solution 22.

Electrolytic solution 23: Under an argon atmosphere, 25 wt% EC, 55 wt% DMC, 20 wt% EMC, 2 wt% VC, 1.5 wt% LiPF₆, and 8.5 wt% LiFSI were mixed and dissolved based on the total mass of the electrolytic solution to obtain electrolytic solution 23.

Electrolytic solution 24: Under an argon atmosphere, 25 wt% EC, 55 wt% DMC, 20 wt% EMC, 2 wt% VC, 10 wt% LiPF₆, and 10 wt% LiFSI were mixed and dissolved based on the total mass of the electrolytic solution to obtain electrolytic solution 24.

Electrolytic solution 25: Under an argon atmosphere, 25 wt% EC, 55 wt% DMC, 20 wt% EMC, 2 wt% VC, 5 wt% LiPF₆, and 15 wt% LiFSI were mixed and dissolved based on the total mass of the electrolytic solution to obtain electrolytic solution 25.

Electrolytic solution 26: Under an argon atmosphere, 25 wt% EC, 55 wt% DMC, 20 wt% EMC, 2 wt% VC, 3.5 wt% LiPF₆, and 20 wt% LiFSI were mixed and dissolved based on the total mass of the electrolytic solution to obtain electrolytic solution 26.

Electrolytic solution 27: Under an argon atmosphere, 25 wt% EC, 55 wt% DMC, 20 wt% EMC, 1 wt% VC, 1 wt% FEC, 4 wt% LiPF₆, and 6 wt% LiFSI were mixed and dissolved based on the total mass of the electrolytic solution to obtain electrolytic solution 27.

Electrolytic solution 28: Under an argon atmosphere, 25 wt% EC, 55 wt% DMC, 20 wt% EMC, 1 wt% VC, 1 wt% DTD, 4 wt% LiPF₆, and 6 wt% LiFSI were mixed and dissolved based on the total mass of the electrolytic solution to obtain electrolytic solution 28.

Electrolytic solution 29: Under an argon atmosphere, 25 wt% EC, 55 wt% DMC, 20 wt% EMC, 1 wt% VC, 1 wt% 1,3-propanesultone, 4 wt% LiPF₆, and 6 wt% LiFSI were mixed and dissolved based on the total mass of the electrolytic solution to obtain electrolytic solution 29.

Electrolytic solution 30: Under an argon atmosphere, 25 wt% EC, 55 wt% DMC, 20 wt% EMC, 2 wt% VC, 0.1 wt% hexamethylene diisocyanate, and 10 wt% LiPF₆ were mixed and dissolved based on the total mass of the electrolytic solution to obtain electrolytic solution 30.

Electrolytic solution 31: Under an argon atmosphere, 25 wt% EC, 55 wt% DMC, 20 wt% EMC, 2 wt% VC, 0.001 wt% hexamethylene diisocyanate, 3.5 wt% LiPF₆, and 30 wt% LiFSI were mixed and dissolved based on the total mass of the electrolytic solution to obtain electrolytic solution 31.

### (1.5) Assembly of battery cell

The positive electrode plate, the negative electrode plate, and the separator described above were prepared into an electrode assembly through a winding process or a stacking process. The electrode assembly was placed into a shell composed of an aluminum shell, an aluminum-plastic film, and the like. Subsequently, the different electrolytic solutions described above were injected, followed by standing at a high temperature, formation, and capacity grading to obtain the battery cells in the different examples and comparative examples.

Example 1: The battery cell obtained by assembling the positive electrode plate, the separator, the negative electrode plate, and electrolytic solution 1 described above according to the method described above was taken as Example 1.

Example 2: The battery cell obtained by assembling the positive electrode plate, the separator, the negative electrode plate, and electrolytic solution 2 described above according to the method described above was taken as Example 2.

Example 3: The battery cell obtained by assembling the positive electrode plate, the separator, the negative electrode plate, and electrolytic solution 3 described above according to the method described above was taken as Example 3.

Example 4: The battery cell obtained by assembling the positive electrode plate, the separator, the negative electrode plate, and electrolytic solution 4 described above according to the method described above was taken as Example 4.

Example 5: The battery cell obtained by assembling the positive electrode plate, the separator, the negative electrode plate, and electrolytic solution 5 described above according to the method described above was taken as Example 5.

Example 6: The battery cell obtained by assembling the positive electrode plate, the separator, the negative electrode plate, and electrolytic solution 6 described above according to the method described above was taken as Example 6.

Example 7: The battery cell obtained by assembling the positive electrode plate, the separator, the negative electrode plate, and electrolytic solution 7 described above according to the method described above was taken as Example 7.

Example 8: The battery cell obtained by assembling the positive electrode plate, the separator, the negative electrode plate, and electrolytic solution 8 described above according to the method described above was taken as Example 8.

Example 9: The battery cell obtained by assembling the positive electrode plate, the separator, the negative electrode plate, and electrolytic solution 9 described above according to the method described above was taken as Example 9.

Example 10: The battery cell obtained by assembling the positive electrode plate, the separator, the negative electrode plate, and electrolytic solution 10 described above according to the method described above was taken as Example 10.

Example 11: The battery cell obtained by assembling the positive electrode plate, the separator, the negative electrode plate, and electrolytic solution 11 described above according to the method described above was taken as Example 11.

Example 12: The battery cell obtained by assembling the positive electrode plate, the separator, the negative electrode plate, and electrolytic solution 12 described above according to the method described above was taken as Example 12.

Example 13: The battery cell obtained by assembling the positive electrode plate, the separator, the negative electrode plate, and electrolytic solution 13 described above according to the method described above was taken as Example 13.

Example 14: The battery cell obtained by assembling the positive electrode plate, the separator, the negative electrode plate, and electrolytic solution 14 described above according to the method described above was taken as Example 14.

Example 15: The battery cell obtained by assembling the positive electrode plate, the separator, the negative electrode plate, and electrolytic solution 15 described above according to the method described above was taken as Example 15.

Example 16: The battery cell obtained by assembling the positive electrode plate, the separator, the negative electrode plate, and electrolytic solution 16 described above according to the method described above was taken as Example 16.

Example 17: The battery cell obtained by assembling the positive electrode plate, the separator, the negative electrode plate, and electrolytic solution 17 described above according to the method described above was taken as Example 17.

Example 18: The battery cell obtained by assembling the positive electrode plate, the separator, the negative electrode plate, and electrolytic solution 18 described above according to the method described above was taken as Example 18.

Example 19: The battery cell obtained by assembling the positive electrode plate, the separator, the negative electrode plate, and electrolytic solution 19 described above according to the method described above was taken as Example 19.

Example 20: The battery cell obtained by assembling the positive electrode plate, the separator, the negative electrode plate, and electrolytic solution 20 described above according to the method described above was taken as Example 20.

Comparative Example 1: The battery cell obtained by assembling the positive electrode plate, the separator, the negative electrode plate, and electrolytic solution 21 described above according to the method described above was taken as Comparative Example 1.

Comparative Example 2: The battery cell obtained by assembling the positive electrode plate, the separator, the negative electrode plate, and electrolytic solution 22 described above according to the method described above was taken as Comparative Example 2.

Comparative Example 3: The battery cell obtained by assembling the positive electrode plate, the separator, the negative electrode plate, and electrolytic solution 23 described above according to the method described above was taken as Comparative Example 3.

Comparative Example 4: The battery cell obtained by assembling the positive electrode plate, the separator, the negative electrode plate, and electrolytic solution 24 described above according to the method described above was taken as Comparative Example 4.

Comparative Example 5: The battery cell obtained by assembling the positive electrode plate, the separator, the negative electrode plate, and electrolytic solution 25 described above according to the method described above was taken as Comparative Example 5.

Comparative Example 6: The battery cell obtained by assembling the positive electrode plate, the separator, the negative electrode plate, and electrolytic solution 26 described above according to the method described above was taken as Comparative Example 6.

Comparative Example 7: The battery cell obtained by assembling the positive electrode plate, the separator, the negative electrode plate, and electrolytic solution 27 described above according to the method described above was taken as Comparative Example 7.

Comparative Example 8: The battery cell obtained by assembling the positive electrode plate, the separator, the negative electrode plate, and electrolytic solution 28 described above according to the method described above was taken as Comparative Example 8.

Comparative Example 9: The battery cell obtained by assembling the positive electrode plate, the separator, the negative electrode plate, and electrolytic solution 29 described above according to the method described above was taken as Comparative Example 9.

Comparative Example 10: The battery cell obtained by assembling the positive electrode plate, the separator, the negative electrode plate, and electrolytic solution 30 described above according to the method described above was taken as Comparative Example 10.

Comparative Example 11: The battery cell obtained by assembling the positive electrode plate, the separator, the negative electrode plate, and electrolytic solution 31 described above according to the method described above was taken as Comparative Example 11.

The product parameters of the different examples are detailed in Table 1.

**Table 1: Product parameters of comparative examples and different examples**

| No. | Electrolytic solution | | | | | | | | | | LiFSI/tot al lithium salt | LiFSI/ isocyana te |
|---|---|---|---|---|---|---|---|---|---|---|---|---|
| | VC conte nt | FEC conte nt | DTD conte nt | 1,3-Propanesulto ne content | Hexamethyle ne diisocyanate content | Toluene diisocyana te content | 4-Fluorophen yl isocyanate content | 4-Cyanophen yl isocyanate content | LiPF₆ conten t | LiFSI conten t | | |
| Example 1 | 2.00% | / | / | / | 0.500% | / | / | / | 7.00% | 3.00% | 30% | 6 |
| Example 2 | 2.00% | / | / | / | 0.300% | / | / | / | 7.00% | 3.00% | 30% | 10 |
| Example 3 | 2.00% | / | / | / | 0.100% | / | / | / | 7.00% | 3.00% | 30% | 30 |
| Example 4 | 2.00% | / | / | / | 0.100% | / | / | / | 4.00% | 6.00% | 60% | 60 |
| Example 5 | 2.00% | / | / | / | 0.100% | / | / | / | 1.50% | 8.50% | 85% | 85 |
| Example 6 | 2.00% | / | / | / | 0.100% | / | / | / | 10.00 % | 10.00 % | 50% | 100 |
| Example 7 | 2.00% | / | / | / | 0.100% | / | / | / | 5.00% | 15.00 % | 75% | 150 |
| Example 8 | 2.00% | / | / | / | 0.100% | / | / | / | 2.30% | 20.00 % | 85% | 170 |
| Example 9 | 2.00% | / | / | / | 0.010% | / | / | / | 4.00% | 6.00% | 60% | 600 |
| Example 10 | 2.00% | / | / | / | 0.002% | / | / | / | 4.00% | 6.00% | 60% | 3000 |
| Example 11 | 2.00% | / | / | / | 0.001% | / | / | / | 4.00% | 6.00% | 60% | 6000 |
| Example 12 | 2.00% | / | / | / | 0.001% | / | / | / | 5.00% | 15.00 % | 75% | 15000 |
| Example 13 | 2.00% | / | / | / | 0.001% | / | / | / | 3.50% | 20.00 % | 85% | 20000 |
| Example 14 | 2.00% | / | / | / | / | 0.10% | / | / | 4.00% | 6.00% | 60% | 60 |
| Example 15 | 2.00% | / | / | / | / | / | 0.10% | / | 4.00% | 6.00% | 60% | 60 |
| Example 16 | 2.00% | / | / | / | / | / | / | 0.10% | 4.00% | 6.00% | 60% | 60 |
| Example 17 | 1.00% | 1.00% | / | / | 0.100% | / | / | / | 4.00% | 6.00% | 60% | 60 |
| Example 18 | 1.00% | / | 1.00% | / | 0.100% | / | / | / | 4.00% | 6.00% | 60% | 60 |
| Example 19 | 1.00% | / | / | 1.00% | 0.100% | / | / | / | 4.00% | 6.00% | 60% | 60 |
| Example 20 | / | / | / | / | 0.100% | / | / | / | 4.00% | 6.00% | 60% | 60 |
| Comparati ve Example 1 | 2.00% | / | / | / | / | / | / | / | 7.00% | 3.00% | 30% | / |
| Comparati ve Example 2 | 2.00% | / | / | / | / | / | / | / | 4.00% | 6.00% | 60% | / |
| Comparati ve Example 3 | 2.00% | / | / | / | / | / | / | / | 1.50% | 8.50% | 85% | / |
| Comparati ve Example 4 | 2.00% | / | / | / | / | / | / | / | 10.00 % | 10.00 % | 50% | / |
| Comparati ve Example 5 | 2.00% | / | / | / | / | / | / | / | 5.00% | 15.00 % | 75% | / |
| Comparati ve Example 6 | 2.00% | / | / | / | / | / | / | / | 3.50% | 20.00 % | 85% | / |
| Comparati ve Example 7 | 1.00% | 1.00% | / | / | / | / | / | / | 4.00% | 6.00% | 60% | / |
| Comparati ve Example 8 | 1.00% | / | 1.00% | / | / | / | / | / | 4.00% | 6.00% | 60% | / |
| Comparati ve Example 9 | 1.00% | / | / | 1.00% | / | / | / | / | 4.00% | 6.00% | 60% | / |
| Comparati ve Example 10 | 2.00% | / | / | / | 0.100% | / | / | / | 10.00 % | 0.00% | 0% | 0 |
| Comparati ve Example 11 | 2.00% | / | / | / | 0.001% | / | / | / | 3.50% | 30.00 % | 90% | 30000 |

Next, the test process of related parameters is described.

### (2) Battery performance test

### (2.1) Determination of initial directive current resistance (DCR)

At room temperature, the batteries in the examples and comparative examples were charged at a constant current of 0.5C to 3.65 V, and then charged at a constant voltage until the current was 0.05C. The batteries were discharged at a constant current of 0.5C for 60 min to adjust the batteries to 50% SOC, and the voltage of the batteries at this moment was recorded as U1. The batteries were discharged at a constant current of 4C for 30 s with a sampling interval of 0.1 s, and the voltage at the end of discharge was recorded as U2. The initial DCR of the battery is expressed by the discharge DCR of the battery at 50% SOC, and the initial DCR of the battery = (U1 - U2)/4C.

### (2.2) Determination of high-temperature cycle performance at 60 °C

At 60 °C, the batteries in the examples and comparative examples were charged at a constant current of 1C to 3.65 V, and then charged at a constant voltage until the current was 0.05C. The batteries were left to stand for 5 min and discharged at a constant current of 1C to 2.5 V. This was the first charging and discharging cycle process of the batteries, and the discharge capacities at this moment were recorded as the discharge capacities of the batteries in the first cycle. The batteries were subjected to the charging and discharging cycle process for 1000 cycles according to the method described above, and the discharge capacities of the batteries after 1000 cycles were recorded.

Capacity retention rate (%) of the battery after 1000 cycles at 60 °C = (discharge capacity of the battery after 1000 cycles/discharge capacity of the battery in the first cycle) × 100%.

### (2.3) Determination of high-temperature storage performance at 60 °C

At 25 °C, the batteries in the examples and comparative examples were charged at a constant current of 1/3C to 3.65 V, and then charged at a constant voltage until the current was 0.05C. The batteries at 100% SOC were separately placed in a high-low temperature chamber at 60 °C, and the actual capacities of the batteries were measured every 30 d (the batteries were discharged at 1/3C to 2.5 V and then discharged at 0.04C to 2.0 V to record the actual capacities, and then the batteries were charged at 1/3C to 3.65 V). The batteries were continuously left to stand in the high-low temperature chamber at 60 °C and the discharging at a constant current of 1/3C to 2.5 V was recorded. This was the first charging and discharging cycle process of the batteries, and the discharge capacities at this moment were recorded as the discharge capacities of the batteries in the first cycle. The batteries were subjected to the charging and discharging cycle process for 1000 cycles according to the method described above, and the discharge capacities of the batteries after 1000 cycles were recorded.

Capacity retention rate (%) of the battery after 1000 cycles at 60 °C = (discharge capacity of the battery after 1000 cycles/discharge capacity of the battery in the first cycle) × 100%.

The battery performance tests were performed on Examples 1-20 and Comparative Examples 1-11 prepared according to the method described above. The results are detailed in Table 2.

**Table 2: Performance test results of comparative examples and different examples**

| No. | DCR/mohm | Capacity retention rate after 1000 cycles at 60 °C | Capacity retention rate after 200-day storage at 60 °C |
|---|---|---|---|
| Example 1 | 616.5 | 89.8% | 98.17% |
| Example 2 | 599.0 | 87.2% | 97.69% |
| Example 3 | 590.3 | 84.70% | 97.20% |
| Example 4 | 572.6 | 84.90% | 97.30% |
| Example 5 | 554.9 | 85.10% | 97.60% |
| Example 6 | 560.8 | 85.30% | 97.20% |
| Example 7 | 554.9 | 85.30% | 97.60% |
| Example 8 | 549.0 | 85.40% | 97.90% |
| Example 9 | 572.6 | 84.90% | 96.40% |
| Example 10 | 569.8 | 84.40% | 95.50% |
| Example 11 | 567.0 | 84.00% | 95.00% |
| Example 12 | 549.4 | 84.40% | 94.70% |
| Example 13 | 543.6 | 84.50% | 95.00% |
| Example 14 | 574.3 | 85.30% | 97.80% |
| Example 15 | 570.4 | 84.50% | 96.90% |
| Example 16 | 571.5 | 87.10% | 97.00% |
| Example 17 | 555.6 | 83.70% | 94.80% |
| Example 18 | 533.0 | 83.30% | 96.90% |
| Example 19 | 578.3 | 82.40% | 95.90% |
| Example 20 | 515.4 | Plummet | 68.11% |
| Comparative Example 1 | 581.6 | 83.00% | 93.50% |
| Comparative Example 2 | 564.2 | 83.20% | 93.60% |
| Comparative Example 3 | 546.7 | 83.40% | 93.80% |
| Comparative Example 4 | 552.5 | 83.60% | 93.50% |
| Comparative Example 5 | 546.7 | 83.60% | 93.80% |
| Comparative Example 6 | 540.9 | 83.70% | 94.10% |
| Comparative Example 7 | 552.9 | 82.10% | 92.00% |
| Comparative Example 8 | 530.3 | 81.70% | 94.10% |
| Comparative Example 9 | 575.4 | 80.80% | 93.10% |
| Comparative Example 10 | 610.7 | 82.83% | 93.31% |
| Comparative Example 11 | 542.1 | 80.70% | 90.79% |

From the comparative results of Comparative Example 1 vs. Examples 1-3, Comparative Example 2 vs. Example 4, Comparative Example 3 vs. Example 5, Comparative Example 4 vs. Example 6, Comparative Example 5 vs. Example 7, Comparative Example 6 vs. Example 8, Comparative Example 7 vs. Example 17, Comparative Example 8 vs. Example 18, and Comparative Example 9 vs. Example 19, it can be seen that the isocyanate compound can effectively improve the cycle performance and prolong the storage life of the battery, and meanwhile increases the DCR of the battery.

From the comparative results of Comparative Example 10 vs. Examples 3-8, it can be seen that the addition of the LiFSI to the electrolytic solution can reduce the DCR of the battery. That is, the addition of both the isocyanate compound and the LiFSI to the electrolytic solution can effectively improve the cycle performance and prolong the storage life of the battery, and meanwhile reduce the DCR of the battery.

From the comparative results of Comparative Example 10 vs. Examples 3-8 and Comparative Example 11 vs. Example 13, it can be seen that when the weight content ratio of the LiFSI to the isocyanate compound in the electrolytic solution is excessively small, or when the proportion of the LiFSI in the total lithium salt is excessively small, the LiFSI cannot effectively counteract the adverse effect of the increase in the film-forming impedance of the electrode interface film caused by the isocyanate compound, resulting in a relatively large DCR value of the battery. When the weight content ratio of the LiFSI to the isocyanate compound in the electrolytic solution is excessively large, or when the proportion of the LiFSI in the total lithium salt is excessively large, the LiFSI can corrode the aluminum foil, resulting in a decrease in the cycle performance of the battery and a reduction in the storage life. By controlling the weight content ratio of the LiFSI to the isocyanate compound in the electrolytic solution to be within a suitable range, the acid-binding capacity of the isocyanate compound can be ensured, which reduces the influence of water on the battery performance, thereby improving the cycle performance and storage life of the battery. In addition, the lithium bis(fluorosulfonyl)imide can be enabled to counteract the adverse effect of the increase in the film-forming impedance of the electrode interface film caused by the isocyanate compound, thereby improving the kinetics performance of the battery.

From the comparative results of Example 4 and Examples 9-11, it can be seen that within an appropriate range, the higher the content of the isocyanate compound in the electrolytic solution, the more significantly the cycle performance of the battery is improved, the more significantly the storage life of the battery is prolonged, and the larger the DCR value of the battery is.

From the comparative results of Examples 3-5, it can be seen that within an appropriate range, the higher the weight content of the LiFSI in the total lithium salt, the smaller the DCR value of the battery.

From the comparative results of Example 20, Example 4, and Examples 17-19, it can be seen that while the isocyanate compound is added to the electrolytic solution, a second additive (at least one of VC, FEC, DTD, and 1,3-propanesultone) is also added to ensure that the total amount of the additives in the electrolytic solution is sufficient. This can reduce the risk of battery plummet. Meanwhile, the second additive described above forms a reactive free radical under an electrochemical reaction and participates in the formation of the electrode interface film together with the isocyanate compound, such that the initially formed electrode interface film has a larger molecular weight and the formed film is denser, thereby further improving the quality of the initially formed film.

In the examples and comparative examples described above of the present application, lithium iron phosphate batteries are used for experimental tests. The material of the positive electrode plate of the lithium iron phosphate battery is lithium iron phosphate. The lithium iron phosphate material has a large specific surface area and is easy to absorb water, which exerts a larger influence on the use performance of the lithium iron phosphate battery. In the examples and comparative examples of the present application, by using the lithium iron phosphate batteries to test the effects of the isocyanate compound and the LiFSI on improving the performance of the battery, the experimental effect is more significant. From the analysis of the experimental data described above, it can be seen that the addition of both the isocyanate compound and the LiFSI to the electrolytic solution significantly improves the cycle performance and prolongs the storage life of the lithium iron phosphate battery.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. In addition, without departing from the spirit of the present application, various modifications that can be conceived by those skilled in the art to the embodiments, as well as other embodiments formed by combining some of the constituent elements of the embodiments, are also included within the scope of the present application.

## Claims

1. An electrolytic solution, comprising:
a first additive, wherein the first additive comprises an isocyanate compound represented by formula (I): 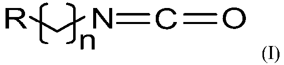
wherein R comprises at least one of a hydrogen atom, a halogen atom, a nitrogen-containing group, an oxygen-containing group, a sulfur-containing group, a phosphorus-containing group, alkyl, cycloalkyl, phenyl, aryl, halophenyl, and alkyl, cycloalkyl, phenyl, aryl or halophenyl that contains at least one isocyanate group, and the value of n is any natural number of 0-8; and
a lithium salt, wherein the lithium salt comprises lithium bis(fluorosulfonyl)imide, and a weight content of the lithium bis(fluorosulfonyl)imide in the lithium salt is 30%-85%, based on a total weight of the lithium salt.

2. The electrolytic solution according to claim 1, wherein the first additive comprises at least one of the following substances: 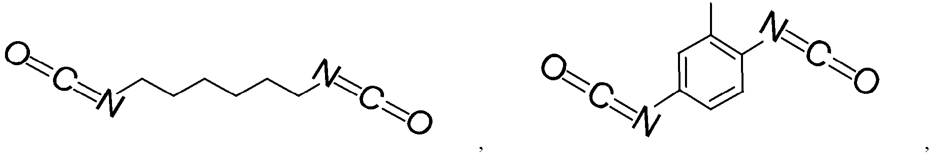 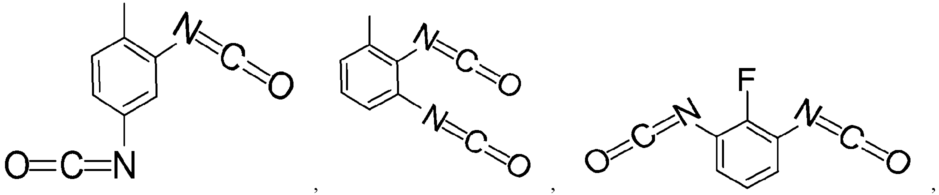 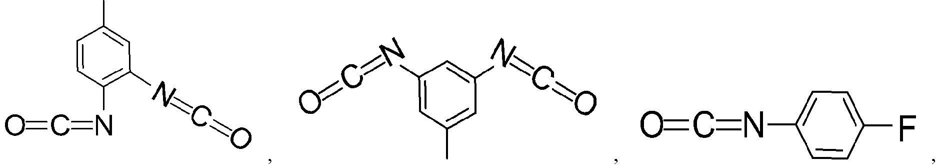 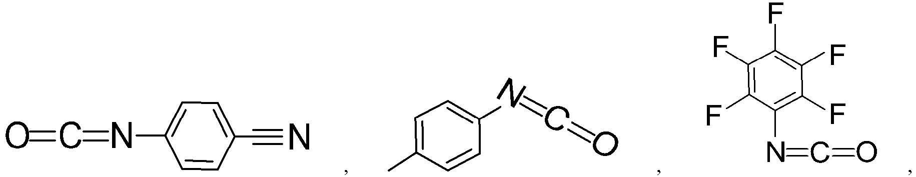 and

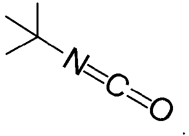

3. The electrolytic solution according to claim 1 or 2, wherein a weight content ratio of the lithium bis(fluorosulfonyl)imide to the isocyanate compound in the electrolytic solution is 6:1-20:0.001.

4. The electrolytic solution according to any one of claims 1 to 3, wherein a weight content of the lithium bis(fluorosulfonyl)imide in the electrolytic solution is 3%-20%, based on a total weight of the electrolytic solution.

5. The electrolytic solution according to any one of claims 1 to 4, wherein a weight content of the isocyanate compound in the electrolytic solution is 0.001%-0.5%, based on the total weight of the electrolytic solution; optionally, the weight content of the isocyanate compound in the electrolytic solution is 0.005%-0.3%; and further optionally, the weight content of the isocyanate compound in the electrolytic solution is 0.01%-0.1%.

6. The electrolytic solution according to any one of claims 1 to 5, wherein the lithium salt further comprises at least one of lithium tetrafluoroborate, lithium bis(oxalato)borate, lithium difluoro(oxalato)borate, lithium hexafluoroarsenate, lithium perchlorate, lithium trifluoromethanesulfonate, lithium difluorophosphate, and lithium hexafluorophosphate.

7. The electrolytic solution according to any one of claims 1 to 6, wherein the electrolytic solution further comprises a second additive, and the second additive comprises at least one of a carbonate, a sulfonate, and a fluorinated compound.

8. The electrolytic solution according to claim 7, wherein the second additive comprises at least one of vinylene carbonate, fluoroethylene carbonate, difluoroethylene carbonate, vinyl ethylene carbonate, ethylene sulfate, and 1,3-propanesultone.

9. The electrolytic solution according to any one of claims 1 to 8, wherein the electrolytic solution further comprises a solvent, and the solvent comprises at least one of a cyclic ester and a chain ester.

10. The electrolytic solution according to claim 9, wherein the solvent comprises at least one of ethylene carbonate, propylene carbonate, fluoroethylene carbonate, γ-butyrolactone, tetrahydrofuran, sulfolane, dimethyl carbonate, ethyl methyl carbonate, diethyl carbonate, methyl formate, methyl acetate, ethyl acetate, methyl acetate, methyl propionate, ethyl propionate, methyl butyrate, and ethyl butyrate.

11. A battery cell, comprising the electrolytic solution according to any one of claims 1 to 10.

12. A battery, comprising the battery cell according to claim 11.

13. An electric device, comprising the battery according to claim 12.
